# FASCICULE DE BREVET EUROPEEN

(11) **EP 0 968 117 B1**
(45) Date de publication et mention de la délivrance du brevet: **15.10.2003**
(21) Numéro de dépôt: 99900496.3
(22) Date de dépôt: 06.01.1999
(51) Int. Cl.: B64D 23/00, A63G 31/00

(54) **DISPOSITIF PERMETTANT DE VOLER A BASSE ALTITUDE EN UTILISANT LA TRACTION D'UN CERF-VOLANT TOUT EN GARDANT UNE LIAISON AVEC LE SOL**
VORRICHTUNG ZUM TIEFFLIEGEN MIT EINEM DRACHEN UNTER EINHALTUNG EINER GRUNDVERBINDUNG
DEVICE FOR FLYING AT LOW ALTITUDE USING THE TRACTIVE POWER OF A KITE WHILE MAINTAINING A LINK WITH THE GROUND

(30) Priorité: 15.01.1998 FR 9800525
(43) Date de publication de la demande: 05.01.2000
(73) Titulaire: Bedlewski, Alexandre, 54540 Montigny (FR)
(72) Inventeur: Bedlewski, Alexandre, 54540 Montigny (FR)
(74) Mandataire: Poupon, Michel
(86) Numéro de dépôt international: FR9900008
(87) Numéro de publication internationale: WO99036315

(56) Documents cités:
- US-A- 3 987 746
- DATABASE WPI Section PQ, Week 9419 Derwent Publications Ltd., London, GB; Class Q25, AN 94-157579 XP002080254 -& SU 1 798 257 A (KOZHEVNIKOV E V) , 28 février 1993

## Description

La présente invention concerne un dispositif pour la pratique d'un sport entièrement nouveau.

L'idée inventive a consisté à permettre à un individu de voler à basse altitude en utilisant la traction d'un cerf-volant, tout en gardant une liaison avec le sol pour limiter l'éloignement par rapport au point de départ.

Cette idée est tout à fait réalisable, il suffirait que l'individu, maintenant les câbles de direction du cerf-volant, soit relié par un câble à un point d'accrochage dans le sol ; cependant elle s'avère fort dangereuse car, selon les variations du vent, l'individu peut s'élever puis retomber violemment sur le sol.

La présente invention a pour but de mettre en oeuvre cette idée sans mettre en danger l'individu.

Pour atteindre ce but, l'inventeur a d'abord eu l'idée de surélever le point d'accrochage du câble retenant l'individu, à une hauteur supérieure à la longueur du câble de manière à ce que, en cas de chute de vent, l'individu n'atteigne pas le sol et reste suspendu par le câble.

Un nouveau problème s'est alors posé.

En effet, l'utilisation d'un mât vertical pour surélever le point d'accrochage créé un nouveau risque pour l'individu, celui de collision contre le mât lors de la retombée.

La solution à tous ces problèmes consiste, selon l'invention, à surélever le point d'accrochage du câble à l'aide d'une structure permettant le balancement sans risque de l'individu suite à l'arrêt de la force de traction.

Plusieurs types de structure peuvent convenir, elles ont en commun le fait de réserver un volume de dégagement autour de la verticale passant par le point d'accrochage et dans lequel l'individu peut se balancer avant de s'immobiliser.

Plus particulièrement, l'invention consiste en un dispositif pour la pratique d'un sport ou d'un loisir par au moins un individu entraîné dans ses évolutions par la force de traction d'un engin volant, plus particulièrement un individu seul ou bien un groupe d'individus maintenus par un même moyen de suspension en un point de suspension entraîné par l'engin volant, caractérisé en ce que l'individu ou le groupe est relié par un moyen de liaison à un point d'accrochage surélevé par rapport au sol, et en ce que la longueur maximale du moyen de liaison reste inférieure à l'altitude du point d'accrochage, de manière que l'individu ou le groupe n'atteigne pas le sol suite à l'arrêt de la force de traction de l'engin volant.

Le point d'accrochage est surélevé par une structure porteuse pouvant par exemple être composée d'un mât ancré dans le sol et maintenu incliné par une pluralité de haubans ou d'un mât autoportant orientable.

L'invention se présente comme une très grande balançoire, évoluant non pas sur deux mais sur trois dimensions, qui utilise la force d'un cerf-volant de traction comme énergie de mouvement. D'une esthétique rappelant les voiles d'un bateau, le dispositif selon l'invention permet de voler à basse altitude tout en gardant une accroche au sol, d'où une sécurité totale.

La pratique de ce nouveau sport apporte diverses sensations : de multiples accélérations en trois dimensions, de légères vitesses, et permet surtout de ressentir un état d'apesanteur. Mais il permet également de se laisser bercer dans les airs ou encore de pratiquer toutes sortes de figures. C'est un sport d'une nouvelle génération et de haute technologie. Il crée, de par les mouvements insolites de sa nacelle, des sensations entièrement nouvelles qui, jusqu'ici n'avaient encore jamais été créées dans le monde du sport.

On comprendra mieux l'invention à l'aide de la description qui suit, faite en référence aux figures annexées suivantes :
- figure 1 : vue d'ensemble d'un premier mode de réalisation d'une structure supportant un individu pratiquant le nouveau sport selon l'invention ;
- figure 2 : représentation géométrique de la structure de la figure 1 dans un plan vertical ;
- figure 3 : représentation géométrique de la structure de la figure 1 en vue de dessus ;
- figure 4 : vue en coupe du mât de la structure de la figure 1 ;
- figure 5 : vue de détail du pied de mât de la figure 4 ;
- figure 6 : vue d'ensemble d'une structure de la figure 1 équipée de voiles décoratives et installée près d'une plage ;
- figure 7 : vue de détail d'un exemple de moyen d'ancrage d'un hauban de la structure des figures précédentes ;
- figure 8 : schéma montrant le principe d'un moyen de réglage de hauban.
- figures 9a, 9b, 9c, 9d : représentations géométriques montrant l'évolution du point de suspension de l'individu en fonction d'une force donnée de traction F ;
- figure 10 : courbes d'altitude d'un point de suspension en fonction du vent ;
- figure 11 : vue d'ensemble d'un deuxième mode de réalisation d'une structure selon l'invention.

Selon les modes de réalisation préférés mais non limitatifs présentés sur les figures, l'invention se compose principalement d'une structure porteuse (3), d'un moyen de liaison (2) de l'individu à la structure porteuse, d'un engin volant de traction (1).

L'engin volant (1) est de préférence mais non limitativement une structure de type parapente mais peut consister en tout type d'engin utilisant la force du vent comme un parachute ou un cerf-volant.

Le moyen de liaison (2) est ici un câble (10), ou une corde d'escalade dynamique ou un autre moyen souple ou rigide, accroché par une de ses extrémités à un point d'accrochage (4) articulé de la structure porteuse (3), et muni à son autre extrémité d'un moyen de suspension de l'individu (5), par exemple un harnais, une nacelle, ou un baudrier. Le moyen de liaison (2) peut comporter en outre un moyen élastique d'amortissement soit au point d'accrochage (4), soit au point de suspension (5).

Dans tous les cas, la longueur maximale du moyen de liaison (2) reste inférieure à l'altitude du point d'accrochage (4) quand l'individu est immobilisé.

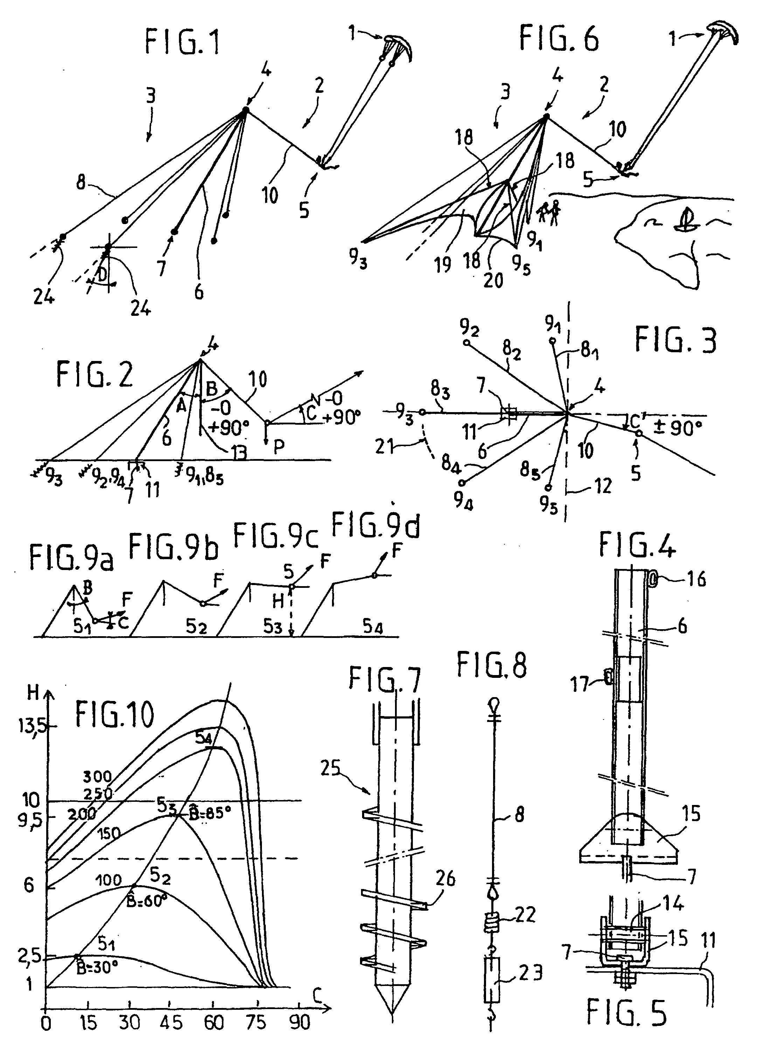

On décrit à présent la structure porteuse (3) selon le premier mode de réalisation mais non limitatif représenté sur les figures 1 à 8.

La structure porteuse représentée se compose principalement d'un mât (6) de préférence en acier ancré dans le sol en un point d'ancrage principal (7) et maintenu en position inclinée d'un angle A par une pluralité de haubans (8i), par exemple cinq : 8₁, 8₂, 8₃ , 8₄, 8₅.

Les haubans (voir figures 1 à 3) sont tendus entre l'extrémité supérieure du mât (6) où se trouve le point d'accrochage articulé (4) et des points d'ancrage secondaires (9i) au nombre de cinq (9₁, 9₂, 9₃, 9₄, 9₅) déposés sur un cercle dont le centre est le point d'ancrage principal (7).

La géométrie de cette structure crée un volume de dégagement situé du même côté que la structure par rapport au plan vertical (12) passant par le point d'accrochage (4) et permettant le balancement de l'individu, lorsque la force de traction F du vent cesse, autour de la verticale ( 13) passant par le point d'accrochage (4).

On se reportera à présent aux figures 4 à 8.

Le mât (6) est un tube d'acier articulé sur une platine de fixation (11) au sol au moyen d'un axe de pivotement ( 14) maintenu par une chape ( 15) boulonnée sur la platine. Ce dispositif avantageux permet de régler l'inclinaison A du mât (6) par rapport à la verticale ( 13) (30° sur les figures) et de faire pivoter le mât autour du point d'ancrage principal (7), et donc de placer l'utilisateur dans la direction du vent.

Le mât (6) est avantageusement formé de plusieurs parties emboitables de façon à être monté et démonté rapidement.

L'extrémité supérieure du mât est équipée de maillons soudés (16) ici au nombre de 5, espacés entre eux de 60° destinés à l'accrochage des haubans (8ᵢ) et disposés d'un même côté par rapport à la verticale passant par le point d'accrochage (4).

Le mât (6) comporte encore sensiblement à mi-hauteur une pluralité de maillons secondaires (17) par exemple trois espacés de 120 ° destinés à l'accrochage de haubans de contre-flambement (18), visibles sur la figure 6 (mais non représentés sur les figures 1 à 3 par souci de clarté) et tendus entre les maillons secondaires (17) et les points d'accrochage secondaires (9₁,9₃,9₅).

Ces haubans de contre-flambement (18) peuvent en outre servir à l'accrochage de voiles (19) à but décoratif et/ou publicitaire comme surla figure 6.

D'autres voiles telles que (20) peuvent être tendues dans les mêmes buts entre les maillons supérieurs (16) et les points d'ancrages du mât et des haubans.

Les haubans sont en acier précontraints de manière à rester tendus.

Pour permettre l'orientation de l'ensemble de la structure en fonction de la direction du vent, les points d'accrochage au sol des haubans doivent être déplaçables sur le cercle (21) de centre (7) et les longueurs des haubans (8) et des haubans de contre-flambement ( 18) doivent être réglables.

A cet effet, on prévoit un moyen de réglage de longueur et de rattrapage de tension, par exemple celui de la figure 8 composé d'une chaîne (22) à plusieurs maillons et d'un tendeur (23).

On prévoit également un moyen d'ancrage spécifique (24) en forme de pieu formé d'un tube pointu portant une hélice soudée (25) permettant le vissage ou le dévissage dans le sol tout en assurant la reprise des efforts sur les haubans.

Dans le cas d'une structure non orientable en fonction de la direction du vent, les moyens d'ancrage (24) seront dirigés dans le prolongement des haubans (figure 2).

Dans le cas d'une structure orientable avec points d'ancrage (9ᵢ) déplaçables, on préférera diriger les points d'ancrage (24) selon un angle D qui est un compromis entre les différentes inclinaisons des haubans principaux (8ᵢ).

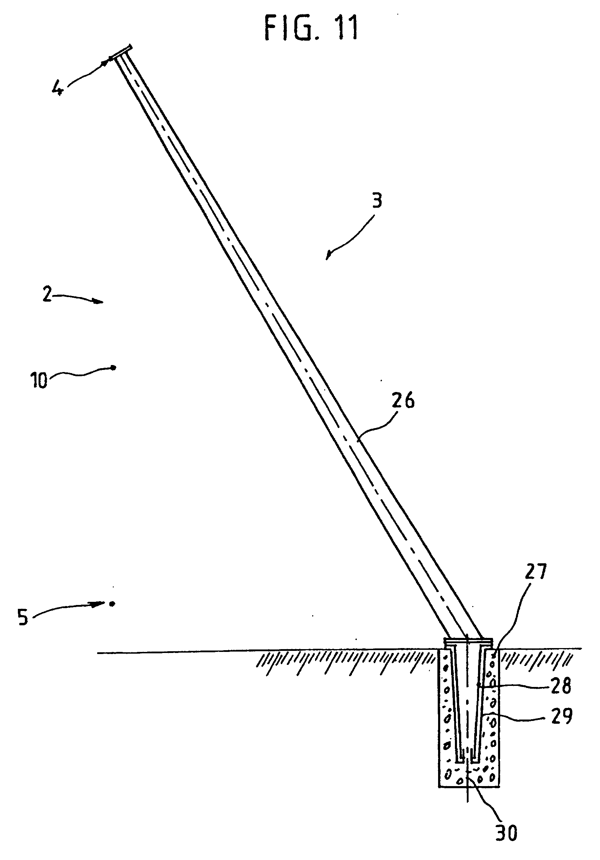

On se reporte à présent à la figure 11 qui représente un autre mode de réalisation de l'invention consistant en une structure (3) autoportante orientable.

Cette structure est constituée d'un mât autoportant (26) (semblable à n candélabre) qui est fixé sur une embase (27) enfuie dans le sol et comportant deux tubes (28,29) emboîtés et pouvant tourner l'un par rapport à l'autre autour d'un axe vertical (30), de façon à permettre l'orientation du mât (26) dans le sens du vent.

Après orientation du mât, les tubes sont boulonnés de manière à former un ensemble non-articulé.

Le mât (3) est orientable selon un pas défini qui est par exemple de 30°, et qui peut être modifié à la demande.

Les mâts autoportants sont définis au catalogue avec une longueur de 12, 18, 24 et 30 mètres, leur longueur peut être augmentée en particulier pour des entraînements militaires.

La structure autoportante est conçue pour supporter les évolutions d'un pilote avec des accélérations tangentielles de 12 G (120 m/s²) et des centrifugations à 4 G (40 m/s²), et pour rester en survie en zone de cyclone (vent de 300 km/h).

La structure autoportante peut également être prévue en version mobile, non représentée, selon laquelle l'embase (27) est montée sur un trépied repliable, transportable en tous terrains, avec la mobilité d'un manège.

On se reportera à présent aux figures 9ₐ à 9_{d} et 10.

Des essais ont été réalisés avec un mât de 10 m de hauteur et un individu d'un poids moyen de 80 kg ou deux personnes pesant 160 kg.

Les structures décrites ci-dessus ont été calculées pour assurer une sécurité totale dans une hypothèse défavorable à savoir une traction horizontale de 1000 daN et un vent de zone 2 (121 km/h ou 11 Baufort).

L'aérodynamique du cerf-volant ou engin volant ( 1) engendre une traction F orientée selon un angle C variant verticalement de 0 à 90° et orientée selon un angle C' variant horizontalement de - 90° à + 90° (voir figures 9ₐ à 9_{d} et figures 2 et 3), elle engendre également une inclinaison B du câble (10) par rapport à la verticale.

Les essais réalisés ont permis d'établir des courbes d'altitude H (figure 10) du point 5 en fonction de la force F de l'engin volant ( 1) représenté sur les figures 9a à 9d.

On peut en déduire l'intensité de la force de traction de l'engin et choisir sa voilure en conséquence.

Les courbes obtenues sont valables pour une utilisation en solo.

Pour une utilisation en duo (un pilote et un passager) il faut multiplier par deux la traction, donc augmenter la voilure de l'engin (1), pour obtenir des altitudes identiques.

De multiples variantes de réalisation de l'invention sont envisageables.

On citera notamment des variantes de la structure porteuse qui pourra se présenter, par exemple, sous la forme d'arceaux, d'un portique ou d'une potence.

Cette structure pourra être fixée à demeure dans un site de loisir ou bien être prévue pour être facilement déplaçable et démontable sans laisser de traces sur le site (comme la structure décrite précédemment).
*Presumably the reference numeral (12) is a clerical error for (2) in the French text.

## Revendications

1. Dispositif pour la pratique d'un sport ou d'un loisir par au moins un individu entraîné dans ses évolutions par la force de traction d'un engin volant (1), plus particulièrement un individu seul ou bien un groupe d'individus maintenus par un même moyen de suspension en un point de suspension (5) entraîné par l'engin volant (1), **caractérisé en ce que** l'individu ou le groupe est relié par un moyen de liaison (2) à un point d'accrochage (4) surélevé par rapport au sol, et **en ce que** la longueur maximale du moyen de liaison (2) reste inférieure à l'altitude du point d'accrochage (4), de manière que l'individu ou le groupe n'atteigne pas le sol suite à l'arrêt de la force de traction de l'engin volant (1).

2. Dispositif selon la revendication 1, **caractérisé en ce que** le point d'accrochage (4) est surélevé par une structure porteuse (3) permettant de réserver un volume de dégagement autour de la verticale passant par le point d'accrochage et dans lequel l'individu peut se balancer avant de s'immobiliser.

3. Dispositif selon la revendication 2, **caractérisé en ce que** la structure porteuse (3) se compose principalement d'un mât (6) ancré dans le sol en un point d'ancrage principal (7) et maintenu en position inclinée par une pluralité de haubans (8).

4. Dispositif selon la revendication 3, **caractérisé en ce que** le mât (6) est un tube articulé sur une platine de fixation (11) au moyen d'un axe de pivotement (14) maintenu par une chape (15) boulonnée sur la platine.

5. Dispositif selon la revendication 4, **caractérisé en ce que** le mât (6) est formé de plusieurs parties emboitables.

6. Dispositif selon l'une des revendications 3 à 5, **caractérisé en ce que** les haubans sont tendus entre l'extrémité supérieure du mât (6) où se trouve le point d'accrochage (4) et des points d'ancrage secondaires (9i) disposés sur un cercle dont le centre est le point d'ancrage principal (7).

7. Dispositif selon l'une des revendications 3 à 6, **caractérisé en ce que** les haubans sont au nombre de cinq et **en ce qu'**ils sont espacés entre eux de 60° et disposés d'un même côté par rapport à la verticale passant par le point d'accrochage (4).

8. Dispositif selon l'une des revendications 3 à 7, **caractérisé en ce que** le mât (6) comporte en outre des maillons secondaires (17) pour l'accrochage de haubans de contre-flambement ( 18).

9. Dispositif selon l'une des revendications 3 à 8, **caractérisé en ce que** chaque hauban est équipé d'un moyen de réglage de longueur et de rattrapage de tension.

10. Dispositif selon la revendication 9, **caractérisé en ce que** le moyen de réglage de longueur et de rattrapage de tension est composé d'une chaîne (22) à plusieurs maillons et d'un tendeur (23).

11. Dispositif selon l'une des revendications 3 à 10, **caractérisé en ce que** chaque hauban est ancré dans le sol par un moyen d'ancrage spécifique (24) en forme de pieu formé d'un tube pointu portant une hélice soudée (25).

12. Dispositif selon la revendication 11, **caractérisé en ce que** les moyens d'ancrage (24) sont dirigés selon un angle D, compromis entre les différentes inclinaisons des haubans principaux (8i).

13. Dispositif selon l'une des revendications 3 à 12, **caractérisé en ce que** au moins un des haubans (8,18) est équipé d'une voile (19 ou 20).

14. Dispositif selon la revendication 2, **caractérisé en ce que** la structure porteuse (3) est composée d'un mât autoportant (26) orientable.

15. Dispositif selon la revendication 14, **caractérisé en ce que** le mât (26) est fixé sur une embase (27) comportant deux tubes (28,29) emboîtés et tournant l'un par rapport à l'autre autour d'un axe vertical (30).

16. Dispositif selon l'une des revendications 1 à 15, **caractérisé en ce que** la structure porteuse autoportante est prévue en version mobile.

17. Dispositif selon l'une des revendications 1 à 16, **caractérisé en ce que** le moyen de liaison (2) est accroché par une de ses extrémités au point d'accrochage (4) et muni à son autre extrémité d'un moyen de suspension de l'individu ou du groupe d'individu (5).

18. Dispositif selon l'une des revendications 1 à 17, **caractérisé en ce que** le moyen de liaison (12) comporte en outre un moyen élastique d'amortissement.

19. Dispositif selon l'une des revendications 1 à 18, **caractérisé en ce que** le point d'accrochage (4) est articulé.

20. Dispositif selon l'une des revendications 17 à 19, **caractérisé en ce que** le moyen de suspension (5) est choisi dans l'ensemble (harnais, nacelle, baudrier).

21. Dispositif selon l'une des revendications 1 à 20, **caractérisé en ce que** l'engin volant est choisi dans l'ensemble (cerf-volant, parachute, parapente).

## Patentansprüche

1. Vorrichtung zum Ausüben eines Sports oder einer Freizeittätigkeit für mindestens eine Person, deren Bewegungen durch die Zugkraft eines Fluggeräts (1) hervorgerufen werden, wobei gehalten von demselben Tragemittel in einem Aufhängepunkt (5) vor allem eine einzige Person aber auch eine Gruppe von Personen vom Fluggerät (1) in Bewegung gesetzt wird, **dadurch gekennzeichnet, dass** die Person oder die Gruppe mit einem Verbindungsmittel (2) mit einem Koppelpunkt (4) oberhalb des Erdbodens verbunden sind und dass die maximale Länge des Verbindungsmittels (2) kleiner bleibt als die Höhe des Koppelpunktes (4), so dass die Person oder die Gruppe den Erdboden nicht erreicht, bis die Zugkraft das Fluggeräts (1) beendet ist.

2. Vorrichtung nach Anspruch 1, **dadurch gekennzeichnet, dass** der Koppelpunkt (4) durch eine Tragestruktur (3) erhöht ist, die es erlaubt, um eine Vertikale durch den Koppelpunkt Platz zum Aussteigen vorzubehalten, in dem die Person baumeln kann, bevor sie zum Stillstand kommt.

3. Vorrichtung nach Anspruch 2, **dadurch gekennzeichnet, dass** die Tragestruktur (3) hauptsächlich aus einem im Erdboden in einem Hauptankerpunkt (7) verankerten Mast (6) zusammengesetzt ist, der durch eine Vielzahl von Spannseilen (8) in einer geneigten Position gehalten wird.

4. Vorrichtung nach Anspruch 3, **dadurch gekennzeichnet, dass** der Mast (6) ein Rohr ist, das gelenkig auf einer Trageplatte (11) mittels einer Drehachse (14) angeordnet ist, die von einem verbolzten Gabelbügel (15) auf der Platte gehalten wird.

5. Vorrichtung nach Anspruch 4, **dadurch gekennzeichnet, dass** der Mast (6) aus mehreren, ineinander steckbaren Teilen gebildet ist.

6. Vorrichtung nach einem der Ansprüche 3 bis 5, **dadurch gekennzeichnet, dass** die Spannseile zwischen dem oberen Ende des Mastes (6), wo sich der Koppelpunkt (4) befindet, und sekundären Ankerpunkten (9i), die in einem Kreis angeordnet sind, dessen Zentrum der Hauptankerpunkt (7) bildet, gespannt sind.

7. Vorrichtung nach einem der Ansprüche 3 bis 6, **dadurch gekennzeichnet, dass** fünf Spannseile vorgesehen sind, dass zwischen diesen ein Freiraum von 60° vorliegt und dass sie auf derselben Seite in Bezug auf die Vertikale durch den Koppelpunkt (4) angeordnet sind.

8. Vorrichtung nach einem der Ansprüche 3 bis 7, **dadurch gekennzeichnet, dass** der Mast (6) des Weiteren sekundäre Ösen (17) zum Verankern von Spannseilen (18) zur Vermeidung eines Knickens aufweist.

9. Vorrichtung nach einem der Ansprüche 3 bis 8, **dadurch gekennzeichnet, dass** jedes Spannseil mit einem Mittel zum Einstellen der Länge und zum Nachstellen der Spannung ausgestattet ist.

10. Vorrichtung nach Anspruch 9, **dadurch gekennzeichnet, dass** das Mittel zum Einstellen der Länge und zum Nachstellen der Spannung aus einer vielgliedrigen Kette (22) und einem Spanner (23) besteht.

11. Vorrichtung nach einem der Ansprüche 3 bis 10, **dadurch gekennzeichnet, dass** jedes Spannseil mittels eines spezifischen Ankermittels (24) in Form einem Pfostens mit dem Erdboden verankert ist, der aus einem spitz zulaufenden Rohr gebildet ist, das eine angeschweißte Wendel (25) aufweist.

12. Vorrichtung nach Anspruch 11, **dadurch gekennzeichnet, dass** die Ankermittel (24) jeweils entsprechend einem Winkel D aus einem Mittelwert zwischen den verschiedenen Neigungen der Hauptspannseile (8i) ausgerichtet sind.

13. Vorrichtung nach einem der Ansprüche 3 bis 12, **dadurch gekennzeichnet, dass** mindestens eines der Spannseile (8, 18) mit einem Segel (19 oder 20) ausgestattet ist.

14. Vorrichtung nach Anspruch 2, **dadurch gekennzeichnet, dass** die Tragestruktur (3) aus einem ausrichtbaren, selbstragenden Mast (26) besteht.

15. Vorrichtung nach Anspruch 14, **dadurch gekennzeichnet, dass** der Mast (26) an einem Sockel (27) befestigt ist, die aus zwei ineinander gesteckten Rohren (28, 29) besteht, wobei das eine Rohr im Verhältnis zum anderen Rohr um eine vertikale Achse (30) drehbar ist.

16. Vorrichtung nach einem der Ansprüche 1 bis 15, **dadurch gekennzeichnet, dass** die selbstragende Tragestruktur als eine mobile Ausführung vorgesehen ist.

17. Vorrichtung nach einem der Ansprüche 1 bis 16, **dadurch gekennzeichnet, dass** das Verbindungsmittel (2) mit einem seiner Enden am Koppelpunkt (4) verbunden ist und mit seinem anderen Ende mit einem Tragemittel (5) für eine Person oder für eine Gruppe von Personen ausgestattet ist.

18. Vorrichtung nach einem der Ansprüche 1 bis 17, **dadurch gekennzeichnet, dass** das Verbindungsmittel (2) des Weiteren ein elastisches Dämpfungsmittel aufweist.

19. Vorrichtung nach einem der Ansprüche 1 bis 18, **dadurch gekennzeichnet, dass** der Koppelpunkt (4) gelenkig ist.

20. Vorrichtung nach einem der Ansprüche 17 bis 19, **dadurch gekennzeichnet, dass** das Tragemittel (5) aus der Gruppe (Gurtgeschirr, Gondel, Sitzgurt) ausgewählt ist.

21. Vorrichtung nach einem der Ansprüche 1 bis 20, **dadurch gekennzeichnet, dass** das Fluggerät aus der Gruppe (Drachen, Fallschirm, Gleitschirm) ausgewählt ist.

## Claims

1. Apparatus for the practising of a sport or leisure activity by at least one individual, displaced in his exercises by the traction force of a flying device (1), more particularly a single individual or indeed a group of individuals retained by one and the same suspension means at a suspension point (5) displaced by the flying device (1), **characterised in that** the individual or the group is connected by a connecting means (2) to an attachment point (4), which is raised relative to the ground, and **in that** the maximum length of the connecting means (2) remains less than the altitude of the attachment point (4), so that the individual or the group does not reach the ground following the cessation of the traction force of the flying device (1).

2. Apparatus according to claim 1, **characterised in that** the attachment point (4) is raised by a supporting structure (3), which permits a clearance to be maintained about the vertical which passes through the attachment point, and in which clearance the individual may swing before being immobilised.

3. Apparatus according to claim 2, **characterised in that** the supporting structure (3) is made up principally of a mast (6) anchored in the ground at a principal anchoring point (7) and maintained in an inclined position by a plurality of stays (8).

4. Apparatus according to claim 3, **characterised in that** the mast (6) is a tube articulated on a securing plate (11) by means of a pivotable spindle (14) maintained by a fork (15) bolted on the plate.

5. Apparatus according to claim 4, **characterised in that** the mast (6) is formed from several parts which can be fitted together.

6. Apparatus according to one of claims 3 to 5, **characterised in that** the stays are tensioned between the upper end of the mast (6), where the attachment point (4) is situated, and secondary anchoring points (9i) which are disposed in a circle, the centre of which is the principal anchoring point (7).

7. Apparatus according to one of claims 3 to 6, **characterised in that** the stays number five, and **in that** they are spaced apart by 60° and disposed on one and the same side relative to the vertical, which passes through the attachment point (4).

8. Apparatus according to one of claims 3 to 7, **characterised in that** the mast (6) also comprises secondary shackles (17) for the attachment of anti-buckling stays (18).

9. Apparatus according to one of claims 3 to 8, **characterised in that** each stay is fitted with a means for adjusting the length and for taking up the play in the tension.

10. Apparatus according to claim 9, **characterised in that** the means for adjusting the length and for taking up the play in the tension is made up of a chain (22), which has several links and a tightening means (23).

11. Apparatus according to one of claims 3 to 10, **characterised in that** each stay is anchored in the ground by a specific anchoring means (24) in the form of a stake formed from a pointed tube carrying a welded helix (25).

12. Apparatus according to claim 11, **characterised in that** the anchoring means (24) are orientated at an angle D, which is a compromise between the various inclinations of the principal stays (8i).

13. Apparatus according to one of claims 3 to 12, **characterised in that** at least one of the stays (8, 18) is fitted with a sail (19 or 20).

14. Apparatus according to claim 2, **characterised in that** the supporting structure (3) is made up of a swivelling self-supporting mast (26).

15. Apparatus according to claim 14, **characterised in that** the mast (26) is secured to a base (27), which comprises two tubes (28, 29) fitted together and rotating relative to each other about a vertical axis (30).

16. Apparatus according to one of claims 1 to 15, **characterised in that** the self-supporting supporting structure is provided in a mobile version.

17. Apparatus according to one of claims 1 to 16, **characterised in that** the connecting means (2) is attached by one of its ends to the attachment point (4) and provided, at its other end, with a means for suspending the individual or the group of individuals (5).

18. Apparatus according to one of claims 1 to 17, **characterised in that** the connecting means (12)* also comprises a resilient damping means.

19. Apparatus according to one of claims 1 to 18, **characterised in that** the attachment point (4) is articulated.

20. Apparatus according to one of claims 17 to 19, **characterised in that** the suspension means (5) is selected from the group (harness, cradle, belt).

21. Apparatus according to one of claims 1 to 20, **characterised in that** the flying device is selected from the group (kite, parachute, paraglider).
